Europäisches Patentamt

(19) European Patent Office

Office européen des brevets

(11) Numéro de publication: **0 169 137**
**B1**

(12) **FASCICULE DE BREVET EUROPEEN**

(45) Date de publication du fascicule du brevet: **20.06.90**

(51) Int. Cl.⁵: **G 11 B 23/28**

(21) Numéro de dépôt: **85401374.5**

(22) Date de dépôt: **05.07.85**

(54) **Procédé de stockage sur un disque de plusieurs séries d'informations destinées à différents utilisateurs et disque réalisé par ce procédé.**

(30) Priorité: **11.07.84 FR 8411012**

(43) Date de publication de la demande:
**22.01.86 Bulletin 86/04**

(45) Mention de la délivrance du brevet:
**20.06.90 Bulletin 90/25**

(84) Etats contractants désignés:
**AT BE CH DE GB IT LI LU NL SE**

(56) Documents cités:
**EP-A-0 110 511**
**GB-A-2 075 740**
**US-A-1 761 212**

(73) Titulaire: **LOGIVISION**
**46 rue du Docteur Charcot**
**F-92000 Nanterre (FR)**

(72) Inventeur: **Dupuy, Alain**
**46 rue du Docteur Charcot**
**F-92000 Nanterre (FR)**
Inventeur: **Durix, Christian**
**23 avenue Aristide Briand La Hacquinière**
**F-91440 Bures S/Yvette (FR)**

(74) Mandataire: **Moncheny, Michel et al**
**c/o Cabinet Lavoix 2 Place d'Estienne d'Orves**
**F-75441 Paris Cedex 09 (FR)**

Courier Press, Leamington Spa, England.

## Description

La présente invention concerne un procédé de stockage sur un disque optique de plusieurs séries d'informations destinées à plusieurs utilisateurs et un tel disque.

Ainsi la présente invention est relative aux dispositifs de stockage d'informations et se rapporte plus particulièrement aux dispositifs de stockage d'images sur vidéodisque.

Les dispositifs supports de banques d'images sont nombreux et variés. Il s'agit notamment de classeurs d'images, de diapositives, de microfiches, de films cinématographiques de 35 mm, de bandes vidéo, etc.

Les progrès des techniques électroniques, informatiques et audiovisuelles conduisent à de nouveaux dispositifs supports de banques d'images qui se différencient par leur capacité en images très importante et par la rapidité de l'accès à un élément de la banque d'images.

Le vidéodisque constitue un tel support de banques d'images. A ce jour, en l'état de la technique, il est possible de construire sur une seule face de vidéodisque une ou plusieurs banques d'images d'un nombre total d'images fixes de l'ordre de 50 000 ou un mixage d'images fixes et de séquences animées dans la relation de 1 seconde de séquence animée pour 25 images (cf tableau 1) chacune des images fixes ou des séquences animées étant accessibles dans des délais de l'ordre de quelques secondes dans le domaine du stockage d'images.

Le tableau ci-après donne les possibilités qu'offre le vidéodisque.

| Capacité vidéodisque (1 face) Banques d'images |
| --- |
| 54 000 images fixes environ |
| ou    36 minutes environ de séquences animées |
| ou    mixage images fixes/séquences animées dans la relation 1 seconde de séquence animée pour 25 images. |

La capacité importante du vidéodisque et des supports existants ou futurs issus des technologies de pointe dépassent, dans de nombreuses applications, les besoins effectifs d'un seul utilisateur.

En revanche, les frais associés à la réalisation matérielle d'un vidéodisque (en particulier de la matrice) sont relativement importants et ne sont que très peu sensibles du nombre d'images correspondantes.

Il est donc naturel de rechercher à rassembler plusieurs utilisateurs indépendants sur la même face de vidéodisque.

L'obstacle essentiel est d'assurer alors, à chaque utilisateur, la confidentialité de sa propre base d'images et d'interdire tout accès non autorisé à sa banque d'images par les autres utilisateurs partageant le même vidéodisque que lui, c'est-à-dire possédant une copie issue de la même matrice.

Le brevet US—A—1 761 212 décrit un procédé d'enregistrement phonographique sur un disque ou un cylindre selon lequel, lorsqu'on souhaite supprimer une portion de l'enregistrement par exemple pour des raisons de censure, on réalise dans la zone de l'enregistrement à supprimer, une rainure d'une profondeur supérieure à celle du sillon de l'enregistrement, ladite rainure étant destinée à empêcher l'aiguille de l'appareil de lecture de suivre le sillon d'enregistrement dans la zone supprimée.

Cependant, la technique décrite dans ce document ne résout pas le problème du groupage sur un même disque de séries d'informations destinées à plusieurs utilisateurs.

L'invention vise à assurer cette confidentialité de chaque banque d'images.

Divers procédés de codage de signaux vidéo existent à ce jour qui seraient parfaitement susceptibles de convenir en principe pour assurer la confidentialité des banques d'images, le signal vidéo de chaque banque étant "codé" au moment de la réalisation de la bande vidéo maitre, selon une "clé" transmise uniquement au propriétaire de la banque d'images en question.

Un exemple particulier de codage de signaux vidéo est le codage mis au point pour la 4ème chaine française de télévision.

Ces procédés de codage conduisent toutefois systématiquement à la nécessité.

a) de coder le signal vidéo lors de la préparation de la bande vidéo maître;

b) de créer la matrice et les copies de vidéodisques à partir d'un signal vidéo codé;

c) de décoder le signal vidéo lors de la lecture du vidéodisque à partir de la clé de chaque utilisateur.

Les opérations a) et c) impliquent l'usage d'un codeur et d'un décodeur, augmentant ainsi sensiblement le prix du service de confidentialité offert aux utilisateurs.

En outre, l'opération b) est rendue beaucoup plus complexe et difficile dans la mesure où les mesures de contrôle et de qualité ne peuvent pas être effectuées "à vue" à partir d'un signal vidéo codé.

L'invention vise à créer des moyens permettant une réalisation de la confidentialité en question, de façon extrêmement simple et peu coûteuse.

Elle a donc pour objet un procédé de stockage sur un disque optique de plusieurs séries d'informations destinées à plusieurs utilisateurs, consistant à enregistrer les séries d'informations sur des plages concentriques du disque, et à disposer sur le disque au moins une zône de brouillage s'étendant radialement sur tout le disque à l'exception de la plage contenant les informations pour l'utilisateur auquel le disque est destiné, et rendant inintelligibles les informations portées par les plages du disque autres que celles intéressant ledit utilisateur.

L'invention a également pour objet un disque de stockage de plusieurs séries d'informations destinées à différents utilisateurs, caractérisé en ce que le disque est un disque optique il comporte plusieurs plages concentriques sur lesquelles sont enregistrées des informations destinées à autant d'utilisateurs différents et en ce que les plages du disque intéressant des utilisateurs autres que celui auquel le disque est destiné, portent chacune au moins une zone radiale de brouillage rendant inintelligibles les informations contenues dans ces plages.

L'invention sera mieux comprise à la lecture de la description qui va suivre faite en référence au dessin annexé, donné uniquement à titre d'exemple et sur lequel:

—la Figure 1 est une vue schématique en plan d'un vidéodisque à plusieurs plages d'informations d'images suivant l'invention;

—la Figure 2 est une vue schématique partielle en coupe du vidéodisque de la Figure 1.

Avant d'entreprendre la description de l'invention proprement dite, on va donner ci-après quelques indications de rappel relatives à la technologie des vidéodisques.

Dans l'état actuel d'avancement technologique, l'information utile que comporte un vidéodisque consiste en une suite de "cuvettes" microscopiques disposées sur un plan intérieur à un support transparent parallèle à sa surface, selon une série de cercles concentriques.

Selon les standards, ou les modes d'enregistrement, chacun de ces cercles concentriques correspond à une ou à deux images.

Une séquence animée, ou une suite de plusieurs images fixes indépendantes, correspond donc à une séquence ou à une suite de plusieurs cercles de "cuvettes" consécutifs.

La lecture des informations contenues dans le vidéodisque et la reproduction du signal vidéo correspondant aux images d'origine est assurée par la détection de la réflexion d'un pinceau lumineux de lumière laser modulé par les "cuvettes" en question.

Par ailleurs, il est à noter que les cercles consécutifs de "cuvettes" correspondant à des suites de plusieurs image identiques sont facilement détectables sur le vidéodisque à l'oeil nu ou, au besoin, avec un microscope.

Il est à noter également que le marquage de "chapitres", dans certains procédés de fabrication de vidéodisques, fait apparaître de la même façon sur ce vidéodisque des zones repérables à l'oeil nu ou avec un microscope.

On va maintenant décrire un vidéodisque à plusieurs plages d'informations d'images enregistrées pour plusieurs utilisateurs mais dont les informations d'une seule plage sont intelligibles pour l'utilisateur intéressé par ladite plage, les autres informations lui étant suivant l'invention rendues inaccessibles.

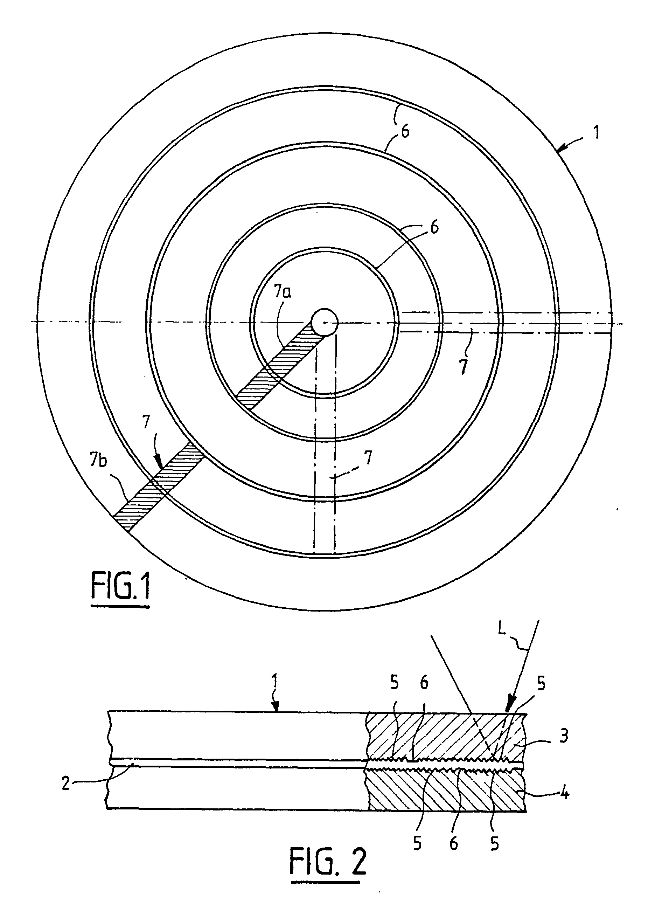

Le vidéodisque représenté aux Figure 1 et 2 est désigné par la référence générale 1. Il comporte une âme 2 en un matériau permettant l'impression, les deux faces de cette âme étant recouvertes de couches 3 et 4 d'un matériau de protection transparent à la lumière.

Sur chacune des faces de l'âme sont imprimées des séries d'informations d'images destinées à plusieurs utilisateurs. Les informations destinées à des utilisateurs correspondants sont groupées dans des plages concentriques 5 séparées entre elles par des zônes étroites 6 ne portant pas d'informations ou portant des informations uniformes, pour indiquer le passage d'une plage 5 destinée à un utilisateur à une plage 5 voisine destinée à un autre utilisateur.

On voit sur la Figure 2 des plages 5 enregistrées sous forme de groupes de sillons concentriques entre lesquelles sont prévues des zônes de séparation 6.

La réalisation d'un tel vidéodisque est assurée de façon classique, à partir d'une matrice.

Afin d'assurer la confidentialité des informations contenues dans les plages 5 destinées à des utilisateurs autres que celui pour lequel une copie donnée est prévue, on crée sur cette copie, de façon inamovible un obstacle de brouillage, réfléchissant ou non transparent à la lumière recouvrant une zône déterminée de toutes les plages concentriques 5 à l'exception de la plage contenant les informations devant rester accessibles.

Cette zone refléchissante ou non transparente est représentée en 7 sur la Figure 1. Elle est en fait constituée de deux zones radiales 7a et 7b s'étendant du centre à la périphérie du vidéodisque et recouvrant des régions correspondantes des plages 5 à l'exception de la troisième plage à partir du centre dont les informations doivent rester accessibles.

Ainsi seules les copies destinées au "propriétaire" de la banque d'images en question ne comportent pas cet "écran" interdisant la lecture normale de l'information contenue dans les plages concentriques 5 correspondantes.

Les obstacles réfléchissants ou opaques tels que 7 assurent la confidentialité recherchée dans la mesure où ils rendent impossible la pénétration du rayon laser L de lecture (Figure 2) à l'intérieur du vidéodisque jusqu'à l'âme 2 comportant les "cuvettes" correspondant à l'information qui ne doit pas être accessible pour l'utilisateur de la copie en question, et rendent donc à fortiori impossible la modulation par ces "cuvettes" du rayon laser réfléchi et la reproduction des images initiales confidentielles.

La Demanderesse a constaté qu'il n'est pas nécessaire que l'écran 7 réfléchissant ou non transparent recouvre le périmètre complet des plages 5 de "cuvettes" dont on veut interdire la lecture. Un écran radial de quelques millimètres de largeur sur chaque plage est suffisant pour obtenir ce résultat.

Bien entendu, si on souhaite laisser accessible une autre plage d'informations, on réalise l'écran radial 7 de façon correspondante comme représenté en trait mixte sur la Figure 1.

L'écran 7 peut être réalisé de diverses façon dont on va maintenant donner des exemples non limitatifs.

On peut tout d'abord réaliser la zone 7 en collant de façon inamovible sur les zones radiales des plages 5 à "brouiller", une bande adhésive. Une bande d'aluminium adhésif auto-collante de 5 mm de largeur s'est avérée efficace.

Selon un autre procédé, on peut créer la zône 7 par impression d'encre en utilisant par exemple un marqueur spécial indélébile à pointe en feutre.

Selon un autre mode de réalisation, on pratique sur des zônes radiales de plages portant des informations devant rester confidentielles, des rayures par grattage irréversible de la surface de revêtement 3 ou 4 ce qui comme dans les cas précédentes empêche le rayonnement L du laser de lecture d'atteindre les "cuvettes" gravées dans les sillons des plages 5 interdites.

Selon encore une variante de réalisation, on procédé dans un zône radiale 7 à l'altération de la surface et/ou de l'intérieur du vidéodisque pour provoquer l'opacité de la matière ou bien la rendre réfléchissante.

Ceci peut être réalisé par exemple par une déformation à l'aide d'un pinceau laser de puissance ou encore par un traitement chimique localisé de la surface du vidéodisque.

On peut également créer des zônes opaques par un procédé photographique sur une couche sensible préalablement appliquée de façon inamovible à la surface du vidéodisque.

Les zônes 7 sont également réalisables en créant des zônes "blanches" lors de la duplication par mise en place d'un cache positionné de façon appropriée sur la matrice portant l'ensemble des plages 5.

Ce cadre peut être placé par exemple par collage.

A titre d'exemple, mais non limitativement, deux modes pratiques de réalisation sont décrits. Le premier est un mode de réalisation entièrement manuel, qui ne nécessite aucun matériel spécifique. Le second est un mode de réalisation automatique qui nécessite la mise au point d'un "lecteur-marqueur" de vidéodisque.

En mode manuel, les banques d'images de chaque utilisateur sont transférées sur la bande vidéo maître en séparant chaque banque par une série d'images identiques afin de repérer ensuite sur les vidéodisques à l'oeil nu ou au microscope les zônes correspondant à chacune de ces banques d'images.

Le traitement de chaque vidéodisque et la création d'un obstacle opaque ou réfléchissant sur les zônes dont on souhaite interdire la lecture se fait manuellement par repérage visuel des zônes en question (par exemple, marquage au crayon à pointe feutre, ou collage de bandes adhésives, etc . . .).

En mode automatique, il n'est plus utile d'insérer des images de repérage entre les différentes banques d'images car c'est la faculté du vidéodisque de comporter des séquences ou des images "adressables" qui est ici utilisée.

Le traitement de chaque vidéodisque et la création d'un obstacle opaque ou réfléchissant sur les banques d'images dont on souhaite interdire la lecture se fait par repérage automatique de chaque zône correspondante grâce à la fonction du lecteur de vidéodisque d'adressage par numéro de chapitre ou par numéro d'image des zônes correspondantes et le déclenchement d'un système de marquage constitué par exemple, mais non limitativement, par un stylet marqueur solidairement lié au bras de lecture optique du lecteur de vidéodisque ainsi transformé "lecteur-marqueur" de vidéodisque actif.

La méthodologie qui permet, à partir de cette invention, de proposer à divers utilisateurs des copies de vidéodisque partagé tout en assurant la confidentialité des banques d'images de chaque utilisateur se décompose ainsi:

a) Les banques d'images de chaque utilisateur sont transférées sur la bande vidéo maître en séparant chaque banque par une série d'images identiques (par exemples images noires) si le "marquage" est effectué ensuite de façon manuelle.

b) La matrice est réalisée à partir de cette bande maître.

c) A partir de cette matrice, sont réalisés par duplication autant de vidéodisques que nécessaire pour satisfaire les quantités demandées par chaque utilisateur.

d) Avant diffusion à un utilisateur, les copies du vidéodisques qui lui sont destinées sont traitées pour interdire la lecture de toute autre banque d'images que celle de l'utilisateur en question, par repérage à l'oeil nu ou au microscope des zônes 6 d'images identiques, par exemple noires (Figure 1) délimitant chaque banque d'images et marquage correspondant, ou par repérage et marquage automatique à partir des numéros de chapitre ou d'images des zônes en question.

L'invention s'applique à tout support d'information dont la lecture peut être rendue impossible par interposition d'un obstacle approprié créé de façon directe ou indirecte à la surface ou dans le corps du support en question.

Par exemple, mais non limitativement:

—Audio-Disque numérique (y compris standard COMPACT)

—Disque optique numérique

—Vidéodisques lus par d'autres procédés que la lecture optique (effet capacitif, etc . . .).

L'invention a été mise en oeuvre à titre expérimental en utilisant un vidéodisque à lecture laser du type Laservision standard PAL.

Le marquage du vidéodisque a été amené par collage superficiel sur des zônes 7 à occulter de bandes de papier d'aluminium auto-collant de 5 mm de large.

Si l'on souhaite appliquer l'invention à un vidéodisque à lecture capacitive, on formera les zônes de brouillage par application d'un revêtement destiné à modifier la configuration capacitive de la zône correspondante.

A titre d'exemple, un tel revêtement a été réalisé pour un disque Standard VHD par application d'une encre indélébile sur des zônes de 15 mm de large.

## Revendications

1. Procédé de stockage sur un disque optique de plusieurs séries d'informations destinées à plusieurs utilisateurs, consistant à enregistrer les séries d'informations sur des plages (5) concentriques du disque, et à disposer sur le disque au moins une zône (7) de brouillage s'étendant radialement sur tout le disque à l'exception de la plage contenant les informations pour l'utilisateur auquel le disque est destiné, et rendant inintelligibles les informations portées par les plages du disque autres que celles intéressant ledit utilisateur.

2. Procédé suivant la revendication 1, caractérisé en ce qu'il est réalisé de façon manuelle, en ce que les informations pour chaque utilisateur sont transférées sur une bande maître en séparant les informations pour les divers utilisateurs par des informations identiques afin de pouvoir repérer ensuite les plages (5) correspondant à chacune des séries d'informations, et en ce que la création d'une zône (7) de brouillage sur les plages (5) dont on souhaite interdire la lecture est assurée à la main par repérage visuel et marquage des plages (5).

3. Procédé suivant la revendication 1, caractérisé en ce qu'il est appliqué au stockage automatique de plusieurs séries d'informations d'images sur un vidéodisque, en ce que les informations pour les utilisateurs successifs sont transférées sur une bande maître et en ce que la création d'une zône (7) de brouillage sur les plages (5) dont on veut interdire la lecture est assurée par repérage automatique de chaque plage (5) correspondante à l'aide d'un lecteur de vidéodisques pourvu d'une fonction d'adressage des zônes correspondantes et déclenchement d'un système de marquage automatique.

4. Procédé suivant l'une des revendications 1 et 2, caractérisé en ce que le disque d'enregistrement desdites séries d'informations est un vidéodisque, un audio-disque numérique, ou un disque optique numérique.

5. Procédé suivant l'une quelconque des revendications 1 à 4, caractérisé en ce que ladite zône (7) de brouillage est une zône réfléchissante ou non transparente réalisée par collage de façon inamovible à la surface du disque d'une bande adhésive.

6. Procédé suivant l'une quelconque des revendications 1 à 4, caractérisé en ce que ladite zône (7) de brouillage est réalisée par application d'encre indélébile.

7. Procédé suivant l'une quelconque des revendications 1 à 4, caractérisé en ce que ladite zône (7) de brouillage est une zône réfléchissante ou non transparente réalisée par grattage irréversible localisé de la surface du vidéodisque.

8. Procédé suivant l'une quelconque des revendications 1 à 4, caractérisé en ce que ladite zône de brouillage (7) est réalisée par altération localisée de la surface et/ou de l'intérieur du disque, par déformation à l'aide d'un faisceau laser de puissance ou par traitement chimique localisé.

9. Procédé suivant l'une quelconque des revendications 1 à 4, caractérisé en ce que ladite zône (7) de brouillage est réalisée par la mise en place d'un cache sur la matrice servant à réaliser le disque.

10. Disque de stockage de plusieurs séries d'informations destinées à différents utilisateurs caractérisé en ce que le disque est une disque optique et il comporte plusieurs plages concentriques (5) sur lesquelles sont enregistrées des informations destinées à autant d'utilisateurs différents et en ce que les plages (5) du disque intéressant des utilisateurs autres que celui auquel le disque est destiné, portent chacune au moins une zone radiale (7) de brouillage rendant inintelligibles les informations contenues dans ces plages (5).

## Patentansprüche

1. Speicherverfahren von für verschiedene Anwender vorgesehenen mehreren Datenserien auf einer optischen Platte, das das Registrieren der Datenserien auf konzentrischen Bereichen (5) der Platte umfaßt und die Anordnung mindestens einer Rauschstörungzone (7) auf der Platte, die sich radial über die ganze Scheibe erstreckt mit Ausnahme des Bereichs der die Daten für den Anwender enthält, für den die Platte bestimmt ist, und die die Daten unleserlich macht, die von anderen Bereichen der Platte getragen werden als jenen, die den genannten Anwender interessieren.

2. Verfahren nach Anspruch 1, dadurch gekennzeichnet, daß es von Hand durchgeführt wird, daß die Daten für jeden Anwender auf ein Hauptband übertragen und die Daten für die verschiedenen Anwender durch identische Daten voneinander getrennt werden, damit darauf die Bereiche (5), die einer jeden Datenserie entsprechen, geordnet werden können, und daß die Erzeugung einer Rauschstörungzone (7) auf den Bereichen (5), deren Lesen verboten werden soll, von Hand durch visuelle Ortung und Markierung der Bereiche (5) durchgeführt wird.

3. Verfahren nach Anspruch 1, dadurch gekennzeichnet, daß es zur selbsttätigen Speicherung mehrerer Bilddatenserien auf einer Bildplatte verwendet wird, daß die Daten für aufeinander folgende Anwender auf ein Hauptband übertragen werden und daß die Erzeugung einer Rauschstörungzone (7) auf den Bereichen (5), deren Lesen verboten werden soll, durch eine selbsttätige Ortung eines jeden entsprechenden Bereichs (5) mittels eines Bildplattenlesers gewährleistet wird, der mit einer Funktion zum Adressieren der entsprechenden Zonen und zur Auslösung eines selbsttätigen Markiersystems ausgestattet ist.

4. Verfahren nach einem der Ansprüche 1 und 2, dadurch gekennzeichnet, daß die Platte der Aufzeichnung der genannten Datenreihen eine Bildplatte, eine numerische Tonfrequenzplatte oder eine numerische optische Platte ist.

5. Verfahren nach irgendeinem der Ansprüche 1 bis 4, dadurch gekennzeichnet, daß die Rauschstörungzone (7) eine reflektierende oder undurchsichtige Zone ist, die erhalten wird, indem auf die Oberfläche der Platte ein Klebeband nicht abnehmbar befestigt wird.

6. Verfahren nach iregendeinem der Ansprüche 1 bis 4, dadurch gekennzeichnet, daß die Rauschstörungzone (7) durch Aufbringen unauslöschbarer Farbe erhalten wird.

7. Verfahren nach irgendeinem der Ansprüche 1 bis 4, dadurch gekennzeichnet, daß die Rauschstörungzone (7) eine reflektierende oder undurchsichtige Zone ist, die durch ein lokalisiertes, nicht rückgängig zu machendes Schaben der Oberfläche der Bildplatte erhalten wird.

8. Verfahren nach iregendeinem der Ansprüche 1 bis 4, dadurch gekennzeichnet, daß die Rauschstörungzone (7) durch eine lokalisierte Veränderung der Oberfläche und/oder des Platteninneren mittels einer Verformung mit Hilfe eines starken Laserstrahls oder durch lokalisierte chemische Behandlung erhalten wird.

9. Verfahren nach irgendeinem der Ansprüche 1 bis 4, dadurch gekennzeichnet, daß die Rauschstörungzone (7) erhalten wird, indem eine Maske auf die Matrize aufgebracht wird, die zur Erzielung der Platte dient.

10. Speicherplatte für mehrere Datenserien, die für verschiedene Anwender bestimmt sind, dadurch gekennzeichnet, daß sie mehrere konzentrische Bereiche (5) umfaßt, auf denen die für die verschiedenen Anwender bestimmten Daten aufgezeichnet sind und daß die Bereiche (5) der Platte, die für andere Anwender von Interesse sind als jene, für die die Platte bestimmt ist, jeweils mindestens eine radiale Rauschstörungzone (7) tragen, die die in diesen Bereichen (5) enthaltenen Daten unleserlich machen.

## Claims

1. Process for storing on an optical disk several information series intended for several users, consisting of recording the information series on concentric areas (5) of the disk and placing on the disk at least one scrambling zone (7) extending radially over the entire disk, with the exception of the area containing the information for the user for whom the disk is intended and making unintelligible the information carried by the areas of the disk, other than those of interest to said user.

2. Process according to Claim 1, characterized in that it is produced manually, in that the information for each user is transferred to a master tape by separating the information for the various users by identical information so as to be able to then identify the areas (5) corresponding to each of the information series and in that the creation of a scrambling zone (7) on the areas on which reading is to be prevented is ensured manually by visual identification and marking of the areas (5).

3. Process according to Claim 1, characterized in that it is applied to the automatic storing of several image information series on a videodisk, in that the information for successive users is transferred to a master tape and in that the creation of a scrambling zone (7) on the areas whose reading is to be prevented is ensured by the automatic identification of each corresponding area (5) with the aid of a videodisk reader, provided with an addressing function of the corresponding zones and the starting up of an automatic marking system.

4. Process according to either of the Claims 1 and 2, characterized in that the recording disk of said information series is a videodisk, a digital audio disk, or a digital optical disk.

5. Process according to any one of the Claims 1 to 4, characterized in that said scrambling zone (7) is a reflecting or non-transparent zone produced by the irremovable adhesion of an adhesive tape to the disk surface.

6. Process according to any one of the Claims 1 to 4, characterized in that said scrambling zone is produced by applying indelible ink.

7. Process according to any one of the Claims 1 to 4, characterized in that said scrambling zone is a reflecting or non-transparent zone produced by local irreversible roughening of the videodisk surface.

8. Process according to any one of the Claims 1 to 4, characterized in that said scrambling zone (7) is produced by local deterioration of the surface and/or the interior of the disk by deformation with the aid of a power laser beam or local chemical treatment.

9. Process according to any one of the Claims 1 to 4, characterized in that said scrambling zone (7) is produced by installing a mask on the matrix used for producing the disk.

10. Disk for storing several information series intended for different users, characterized in that it is optical disk and has several concentric areas (5) on which are recorded information intended for the same number of different users and in that the areas (5) of the disk of interest to the users other than the user for whom the disk is intended, in each case carry at least one radial scrambling zone (7) rendering unintelligible the information contained in said areas (5).

FIG.1

FIG. 2